Europäisches Patentamt

European Patent Office

Office européen des brevets

(19)

(11) Numéro de publication: **0 401 101**
**A1**

## (12) DEMANDE DE BREVET EUROPEEN

(21) Numéro de dépôt: **90401417.2**

(22) Date de dépôt: **28.05.90**

(51) Int. Cl.5: **B60S 9/08**

(30) Priorité: **30.05.89 FR 8907481**

(43) Date de publication de la demande:
**05.12.90 Bulletin 90/49**

(84) Etats contractants désignés:
**BE DE DK ES FR GB IT LU NL**

(71) Demandeur: **S.E.S.R. - SOCIETE EUROPEENNE DE SEMI-REMORQUES**
**44, rue François 1er**
**F-75008 Paris(FR)**

(72) Inventeur: **Rollet, Jean**
**2 Rue Jean Bart**
**F-89000 Auxerre(FR)**

(74) Mandataire: **Kügele, Bernhard et al**
**NOVAPAT FRANCE 63 bis, boulevard Bessières**
**F-75017 Paris(FR)**

(54) **Dispositif de commande d'une béquille de semi-remorque.**

(57) La présente invention a pour objet un dispositif de commande d'une béquille de semi-remorque.

Selon l'invention, ce dispositif comporte pour manoeuvrer la ou chaque béquille (1a ou 1b) un ensemble vis à billes (6) - écrou (7), un groupe moto-réducteur réversible (11) à frein moteur pour faire tourner la vis (6), une manivelle de manoeuvre (12), munie de moyens anti-retour (13), et des moyens commandés par un levier unique (16) pour débrayer le moteur électrique et accoupler la vis (6) et la manivelle (12).

## FIG.1

Dans certaines utilisations les béquilles de semi-remorques doivent être manoeuvrées rapidement et permettre des changements de niveaux, le véhicule étant en charge.

La mise à niveau d'une semi-remorque en charge par action sur les béquilles est une opération difficile pour l'opérateur car une grande partie de l'énergie développée est absorbée par les frottements du système mécanique de commande.

La présente invention a pour objet un dispositif de commande d'une béquille de semi-remorque qui facilite considérablement la mise à niveau de cette dernière.

Ce dispositif est caractérisé en ce qu'il comporte pour manoeuvrer la ou chaque béquille un ensemble vis à billes-écrou, un groupe moto-réducteur réversible à frein moteur pour faire tourner la vis, une manivelle de manoeuvre munie de moyens anti-retour, et des moyens commandés par un levier unique pour débrayer le moteur électrique et accoupler la vis et la manivelle.

Lorsque la vis est accouplée au groupe moto-réducteur, l'irréversibilité est assurée par le frein moteur; dans le cas de la commande manuelle, elle est assurée par des moyens anti-retour de la manivelle.

On a décrit ci-après, à titre d'exemple non limitatif, un mode de réalisation du dispositif de commande selon l'invention, avec référence au dessin annexé dans lequel :

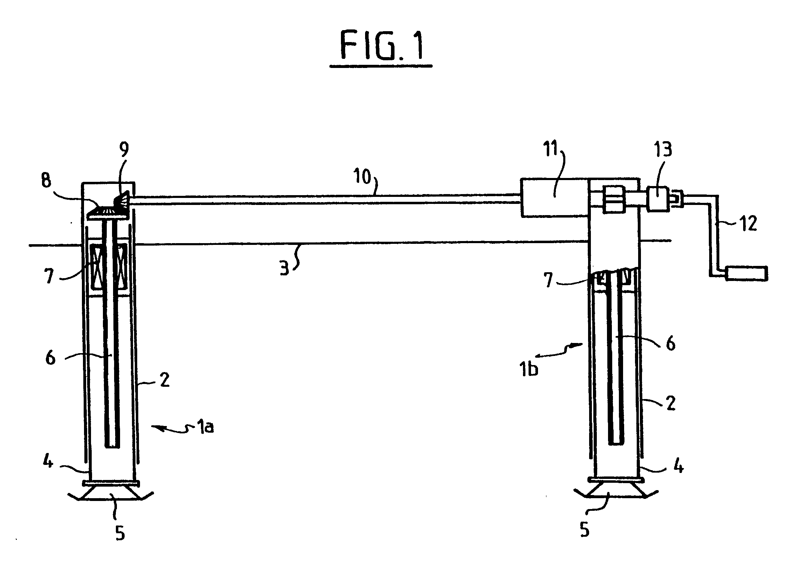

La Figure 1 montre schématiquement deux béquilles d'une semi-remorque et leur dispositif de commande ;

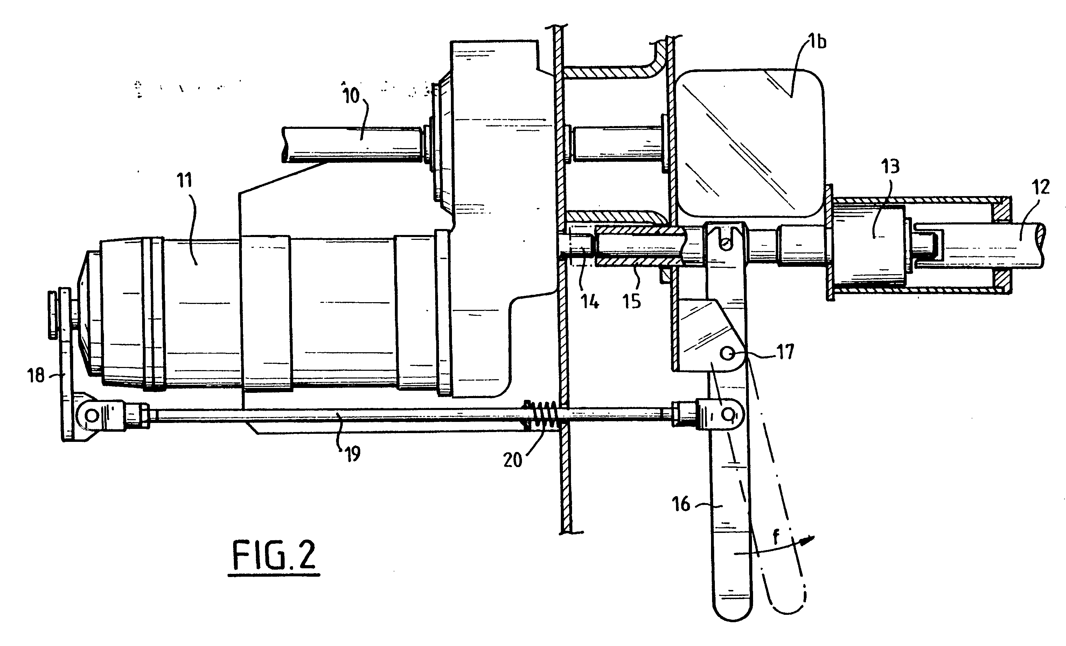

La Figure 2 en est une vue en plan partielle.

Au dessin, on voit deux béquilles d'une semi-remorque qui sont désignées au dessin d'une façon générale par les références 1a et 1b.

Chacune des béquilles comprend un élément extérieur 2 qui est solidaire de la caisse 3 de la semi-remorque et dans lequel est monté coulissant un élément intérieur 4 solidaire d'une embase 5 à sa partie inférieure.

Une vis à billes 6 est montée à rotation dans l'élément intérieur, en étant fixe axialement par rapport à l'élément extérieur. Sur cette vis est engagé un écrou 7 solidaire de l'élément intérieur. Elle porte à son extrémité un pignon conique 8 en prise avec un pignon conique 9 fixé à l'une des extrémités d'un arbre horizontal 10 s'étendant transversalement; cet arbre porte un pignon 9 à chacune de ses extrémités et relie ainsi les deux vis 6.

L'arbre 10 est relié à un arbre de sortie d'un groupe moto-réducteur 11. Ce groupe comprend un moteur électrique présentant à la partie arrière un frein moteur.

Une manivelle 12 associée à un crabot anti-retour 13 est disposée en regard d'un arbre 14 du moto-réducteur, qui est relié à l'arbre 10 et peut entraîner celui-ci. Un fourreau cannelé 15 est monté coulissant sur l'extrémité cannelée de la manivelle 12 et s'engager sur l'extrémité également cannelée de l'arbre 14 et solidariser ainsi en rotation cette manivelle et cet arbre. Le fourreau 15 est articulé sur l'une des extrémités d'un levier de commande 16 monté pivotant en 17 sur la caisse de la semi-remorque. Ce levier est relié au levier 18 de débrayage du frein moteur par une tringle 19 soumise à l'action d'un ressort 20.

Lorsqu'on fait pivoter le levier 16 comme indiqué par la flèche f, le moteur électrique est débrayé et l'arbre 10 peut être entraîné par la manivelle 12, l'irréversibilité de la transmission étant assurée par le crabot 13.

Il va de soi que la présente invention ne doit pas être considérée comme limitée au mode de réalisation décrit et représenté mais en couvre, au contraire, toutes les variantes.


## Revendications

1. Dispositif de commande d'une béquille de semi-remorque
caractérisé en ce qu'il comporte pour manoeuvrer la ou chaque béquille (1a ou 1b) un ensemble vis à billes (6) - écrou (7), un groupe moto-réducteur réversible (11) à frein moteur pour faire tourner la vis (6), une manivelle de manoeuvre (12), munie de moyens anti-retour (13), et des moyens commandés par un levier unique (16) pour débrayer le moteur électrique et accoupler la vis (6) et la manivelle (12).

# FIG. 1

EP 0 401 101 A1

FIG.2

EP 0 401 101 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3151707 (DALTON) <br> * le document en entier * <br> --- | 1 | B60S9/08 |
| A | FR-A-777349 (FIORENTINO ET AUTRE) <br> * le document en entier * <br> --- | 1 | |
| A | GB-A-577496 (MASON) <br> * le document en entier * <br> --- | 1 | |
| A | DE-A-2006379 (DOWSON ET AUTRE) <br> * le document en entier * <br> --- | 1 | |
| A | DE-A-2043540 (DUFF-NORTON) <br> * page 2, ligne 18 - page 8, ligne 11 * <br> * page 9, lignes 1 - 25 * <br> * page 12, ligne 25 - page 13, ligne 24 * <br> * revendications 1-10; figures 1-3 * <br> --- | 1 | |
| A | US-A-1763144 (FULLER) <br> * le document en entier * <br> ----- | 1 | **DOMAINES TECHNIQUES RECHERCHES (Int. Cl.5)** <br><br> B60S <br> B66F |

Le présent rapport a été établi pour toutes les revendications

| Lieu de la recherche | Date d'achèvement de la recherche | Examinateur |
|---|---|---|
| LA HAYE | 07 SEPTEMBRE 1990 | GEYER J.L. |